# EUROPÄISCHE PATENTSCHRIFT

(11) **EP 0 771 231 B1**
(45) Veröffentlichungstag und Bekanntmachung des Hinweises auf die Patenterteilung: **05.12.2001**
(21) Anmeldenummer: 96910888.5
(22) Anmeldetag: 06.05.1996
(51) Int. Cl.: B01D 61/14

(54) **QUERSTROM-FILTRATIONSVERFAHREN ZUM ABTRENNEN VON FLÜSSIGKEIT AUS EINEM FLIESSFÄHIGEN MEDIUM, SOWIE ANLAGE ZU DESSEN DURCHFÜHRUNG**
CROSS-FLOW FILTERING PROCESS FOR SEPARATING FLUID FROM A FREE-FLOWING MEDIUM AND INSTALLATION FOR IMPLEMENTING IT
PROCEDE ET INSTALLATION DE FILTRATION A COURANT TRANSVERSAL POUR SEPARER UN LIQUIDE D'UNE SUBSTANCE COULANTE

(30) Priorität: 16.05.1995 CH 152995
(43) Veröffentlichungstag der Anmeldung: 07.05.1997
(73) Patentinhaber: Bucher-Guyer AG, 8166 Niederweningen (CH)
(72) Erfinder: HARTMANN, Eduard, CH-5425 Schneisingen (CH)
(74) Vertreter: Seeger, Jan
(86) Internationale Anmeldenummer: CH9600171
(87) Internationale Veröffentlichungsnummer: WO9636426

(56) Entgegenhaltungen:
- EP-A- 0 433 200
- WO-A-95/15209
- FR-A- 2 389 400
- FR-A- 2 430 451
- US-A- 3 120 489

## Beschreibung

Die Erfindung betrifft ein Querstrom-Filtrationsverfahren zum Eindicken einer Fest-Flüssig-Mischung, bei dem die zu filtrierende Mischung als Retentat durch zumindest ein Membranmodul mit porösen Membranen hindurchgeführt wird, um von der Mischung ein flüssiges Filtrat durch die Membranen hindurch abzutrennen, sowie eine Anlage zu dessen Durchführung.

Aus EP-B1-0,427,099 (W. Müller) ist schon ein derartiges Verfahren bekannt. Es löst die Aufgabe, einen vorgegebenen Eindickungsgrad des Retentates betriebssicher und einfach einzustellen. Dieses Mikrofiltrationsverfahren, bei dem der zu filtrierende Stoffstrom unter Druck ein Mikrofiltrationsmodul mit tangential überströmten Membranen in einem Kreislauf mit kontinuierlicher Zu- und Abgabe von Konzentrat durchläuft, arbeitet mit Messung von Geschwindigkeit und Druckverlust im Retentatstrom. Aus diesen Messgrössen wird eine Trübstoffkonzentration errechnet und bei Sollwertabweichungen die Konzentrat-Abgabe geregelt.

Bei solchen Membranfiltrationen als Ultrafiltration oder Mikrofiltration besteht das Ziel, das Retentat im Eindickvorgang auf einen möglichst hohen Nasstrubanteil einzudicken. Dadurch lassen sich die Kosten für die nachfolgende Trocknung und Entsorgung des Retentates vermindern. Der erreichbare Grad der Retentateindickung ist wesentlich davon abhängig, bis zu welcher Viskosität das Retentat noch durch die Membranmodule der verwendeten Anlage gebracht werden kann. Um eine hohe Viskosität zu erreichen ist es bisher bekannt, die Anzahl der Module in jeder Serie (in jedem Pass) und die Überström-Geschwindigkeit des Retentates an den Membranen klein zu halten. Eine Verringerung der Anzahl Module pro Pass (wie in WO 95/15209 (BUCHER-GUYER) offenbart) reduziert aber die Leistung der Anlage und verschlechtert somit deren Wirtschaftlichkeit.

Aus US-A-5,271,830 (Gie Anjou-Recherche) ist eine Wasser-Behandlungsanlage für einen tangentialen Filtrations-Kreislauf bekannt. Diese Anlage zur Filtration und zur Reinigung von Flüssigkeiten, insbesondere Wasser, umfasst einen Kreislauf zur Zirkulation des zu behandelnden Wassers mit wenigstens einer tangentialen Filtrations-Membrane. Diese Membrane umfasst eine neue Filtrations-Anlage mit Tangential-Membrane und Ozon-Injektion, welche ermöglicht, das interne und chemische Verstopfen der Membran-Oberfläche einzuschränken. Die Anlage umfasst Mittel zum hinzufügen eines oxidierenden Gases zu der zu behandelnden Flüssigkeit im Kreislauf vor der Membrane. Dabei bilden sich Mikro-Blasen dieses Gases von einer solchen Grösse, dass sie an der Membrane in der Flüssigkeit eine Turbulenz erzeugen. Diese Turbulenz schränkt, in Verbindung mit einer Oxidation, das Verstopfen dieser Membrane ein und führt zu einer Verbesserung des Durchsatzes und der physikalisch/chemischen Eigenschaften des Filtrates. Bei Bedarf umfasst diese Anlage Mittel zur Injektion chemischer Reagentien und/oder Absorptionsmittel in den Filtrations-Kreislauf.

Massnahmen zur Erleichterung des hindurchführens eingedickter Retentate durch eine Filtrationsanlage offenbart US-A-5,271,830 nicht.

Aus FR-A-2430451 (Rhone-Poulenc) ist ein Verfahren zur Verwendung biologischer Reaktionen bei einer Ultra-Filtration bekannt. Dabei wirken Mikroorganismen auf organisches Material ein, welches in einem wässrigen Milieu in Gegenwart eines gelösten oder eingemischten Gases gelöst oder eingemischt ist. Bei diesem Verfahren wird ein Teil der Reaktionsmasse ultrafiltriert, das Ultrafiltrat abgezogen, und das Konzentrat der Ultrafiltration zum Teil oder ganz in die Reaktionsmasse rückgemischt, wobei es zum Teil oder ganz durch eine Stufe mit Unterdruck-Erzeugung geführt wird, welche ein Gas einzieht, welches der Reaktionsmasse beigemischt werden soll.

Massnahmen zur Erleichterung des hindurchführens eingedickter Retentate durch eine Filtrationsanlage offenbart FR-A-2 430 451 nicht.

Der Erfindung liegt deshalb die Aufgabe zugrunde, ein Verfahren und eine Vorrichtung zum Abtrennen von Flüssigkeit aus einem fliessfähigen Medium anzugeben, welche es ermöglichen, gegenüber bekannten Verfahren und Anlagen mehr Flüssigkeit abzutrennen und so höhere Nasstrubanteile im Rückstand zu erreichen.

Gemäss der Erfindung wird die Lösung dieser Aufgabe bei einem Verfahren der eingangs genannten Art durch die Merkmale des Anspruchs 1 erreicht.

Verschiedene zweckmässige Ausführungsformen dieses Verfahrens sind den Patentansprüchen zu entnehmen. Ebenso sind in den Patentansprüchen Anlagen zur vorteilhaften Ausführung des Verfahrens in einer Filtrationsvorrichtung angegeben.

Versuche mit einer erfindungsgemässen Anlage haben ergeben, dass es mit einer Verdoppelung der üblichen Anzahl von Filtrationsmodulen pro Durchlauf-Pass möglich ist, auf 90-95 % Nasstrubanteil einzudicken. Dies wird auf eine Senkung der Viskosität des Retentates durch die Luft-Beimischung bei höheren Nasstrubanteilen zurückgeführt. Das neue Verfahren erlaubt den Einsatz einer grösseren Anzahl von Filtrationsmodulen in Serie pro Pass und somit wirtschaftlichere Anlagen. Durch die höheren Nasstrubanteile im Retentat ergibt sich eine Energieeinsparung bei der Nachtrocknung. Die Senkung der Viskosität des Retentates bringt zusätzlich eine Reduktion des Membranverschleisses. Die genannten Vorteile treten auch bei der Entsaftung von Fruchtmaischen mit an sich bekannten Membrananlagen unter Verzicht auf ein Pressverfahren auf, wenn man die Maischen mit allen Feststoffanteilen direkt im Querstromverfahren filtriert.

Ausführungsbeispiele der Erfindung sind in der folgenden Beschreibung und den Figuren der Zeichnung näher erläutert.

Es zeigen:
Fig. 1 ein Schema einer erfindungsgemässen Anlage zum Abtrennen von Flüssigkeit von einem Medium mit unterschiedlichen Vorrichtungen zur Beimischung von Luft zu dem Medium,
Fig. 2 die Beimischung von Luft an der Oberfläche eines Retentates in einem Batch-Tank,
Fig. 3 die Beimischung von Luft zum Retentat in einer Leitung durch ein gelochtes Rohr,
Fig. 4 die Beimischung von Luft zum Retentat von der Permeatseite eines Filtrationsmodules in einer Serie hintereinander geschalteter Module, und
Fig. 5 bis 13 Vorrichtungen zur Beimischung von Gas zu einem Medium in einer Anlage gemäss Fig. 1.

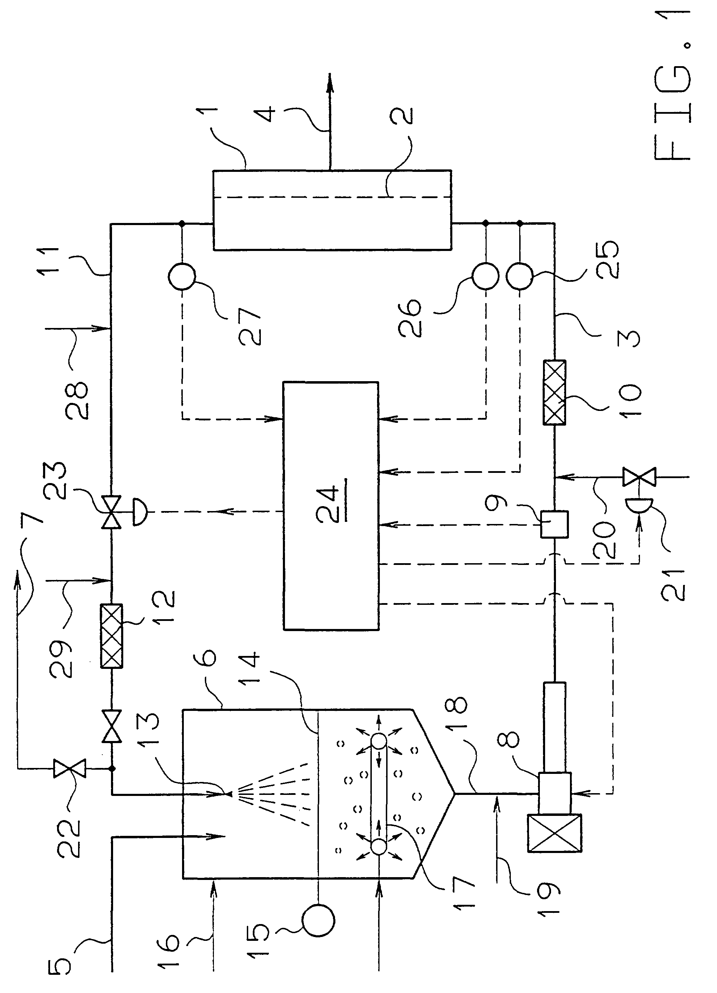

Fig. 1 zeigt schematisch ein Modul 1 an sich bekannter Art mit einer porösen Membran 2 zur Abtrennung eines Permeates von einem Retentat. Das Retentat umfasst flüssige und nichtflüssige Anteile welche dem Modul 1 über eine Leitung 3 zugeführt werden. Im Modul 1 überströmt das Retentat die Membran 2 im Querstromverfahren quer zu ihrer Oberfläche, wobei flüssige Anteile durch deren Poren hindurch gelangen und als Permeat abgeführt werden, wie der Pfeil 4 andeutet. Als wichtige Anwendungsbeispiele für das Retentat bekannt sind Fruchtmaischen bzw. Abwasserschlämme, welche entsaftet bzw. entwässert werden, aber auch Fruchtsäfte, welche geklärt werden. Bekannte derartige Filtrationsanlagen umfassen eine Vielzahl solcher Module 1, welche gleichzeitig parallel und in sogenannten Passen in Serie geschaltet sind, um die Filtrationsleistung zu erhöhen und den Anteil der Restflüssigkeit im Retentat zu verringern.

Wie Fig. 1 zeigt, ist das Retentat durch die Leitung 3 und das Modul 1 in einem Retentatkreislauf geführt. In diesen Retentatkreislauf gelangt das Retentat als fliessfähiges Medium über eine Speiseleitung 5 und einen Batch-Tank 6. Im sogenannten Batch Betrieb wird der Batch-Tank 6 mit einer Charge, oder "Batch", des zu trennenden Mediums gefüllt und der Batch beim anschliessenden Filtrationsbetrieb im Retentatkreislauf belassen, bis ein gewünschter Entwässerungsgrad oder Nasstrubanteil erreicht ist. Erst dann wird das Retentat über eine Leitung 7 und eine Drossel 22 aus dem Kreislauf entfernt, wobei über die Speiseleitung 5 eine Spülflüssigkeit zur Reinigung des Retentatkreislaufes eingeführt werden kann.

Vom Batch-Tank 6 gelangt das Retentat in an sich bekannter Weise über eine gesteuerte Förderpumpe 8, einen Durchflussmesser 9 und einen statischen Mischer 10 in die Leitung 3 und das Modul 1. Als Förderpumpen 8 eignen sich alle volumetrisch fördernden Pumpen, die bekanntlich mit Zellen, Taumelachsen, Zahnrädern oder Kolben arbeiten. Vom Modul 1 her ist das Retentat durch eine weitere Leitung 11 und über einen weiteren Mischer 12 wiederum dem Batch-Tank 6 zugeführt und damit der Retentatkreislauf geschlossen. Zur Regelung des Durchflusses im Retentatkreislauf ist in an sich bekannter Weise eine Regelstufe 24 vorgesehen. Diese regelt über ein Servoventil 23 den Druck am Eingang des Moduls 1 und über die Förderpumpe 8 die Flussgeschwindigkeit in Abhängigkeit von den Messignalen des Durchflussmessers 9. Die Regelstufe 24 steuert oder regelt ferner den Verfahrensablauf in Abhängigkeit von den Signalen einer Viskositätssonde 25 am Eingang des Moduls 1 und zweier Drucksonden 26, 27 am Eingang und am Ausgang des Moduls 1. Die genannten Werte von Flussgeschwindigkeit, Viskosität und Druck des Retentates ändern sich infolge der Eindickung und erfordern daher eine Regelung.

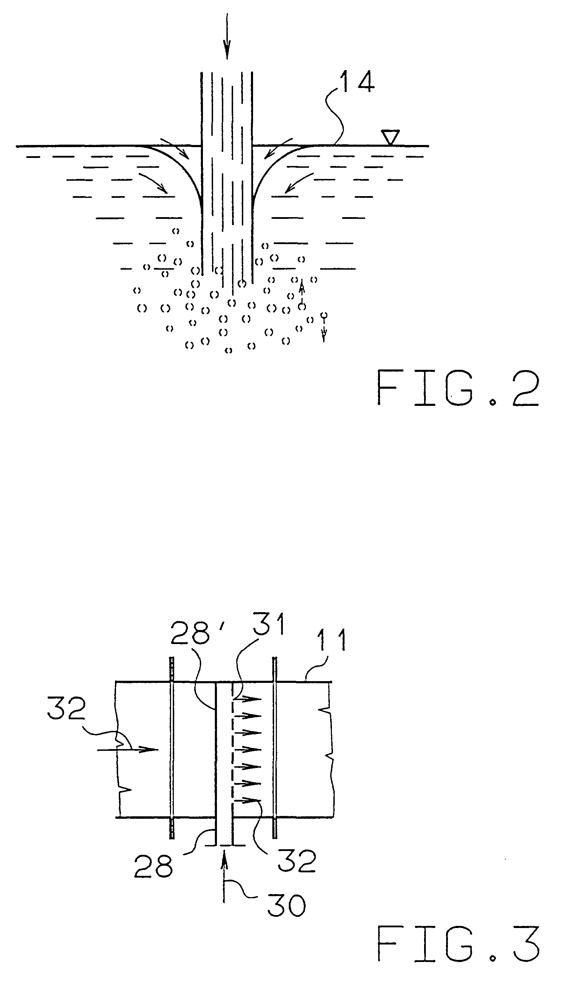

Zur Verbesserung der Förderfähigkeit des Retentates im Kreislauf sind, wie Fig. 1 zeigt, verschiedene Vorrichtungen zur Beimischung eines Gases, vorzugsweise Luft, zum Retentat vorgesehen. Die Rückführleitung 11 endet im Batch-Tank 6 mit einer Öffnung 13 auf einer bestimmten Höhe oberhalb des Niveaus 14 des Retentates. Aus der Öffnung 13 fällt das Retentat auf das Niveau 14 und reisst beim Auftreffen mit hoher Geschwindigkeit am Strömungsrand Luft oder Stickstoff aus dem Tank 6 in das Medium hinein, wie es Fig. 2 im Einzelnen zeigt. Zur Sicherung eines stabilen Betriebes ist am Tank 6 ein Niveausensor 15 montiert, um das Niveau 14 konstant zu halten.

Es hat sich gezeigt, dass die Gasbeimischung beim freien Fall des Retentates im Batch-Tank 6 besonders wirksam erfolgt, wenn der Durchmesser des Tanks 6 klein und die Höhe des Niveaus 14 im Tank 6 gering ist. Die Auftriebsgeschwindigkeit der ins Retentat eingebrachten Gasblasen ist durch ihre Grösse und durch die Viskosität des Retentates bestimmt.

Damit diese Gasblasen in die Verbindungsleitung 18 zwischen Batch-Tank 6 und Förderpumpe 8 gelangen, muss die Strömungsgeschwindigkeit des Retentates abwärts grösser sein, als die Auftriebsgeschwindigkeit der Gasblasen. Bei den genannten Bedingungen für Tankdurchmesser und Niveauhöhe bildet sich vorzugsweise eine Schlund-Strömung im Retentat mit erhöhter Strömungsgeschwindigkeit aus, welche also die Gasblasen wirksam in die Leitung 18 einzieht. In der unteren Zone des Tanks 6 genügt für die Lufteinführung demgemäss eine offene Leitung im Bereich hoher Abwärtsströmung, Siebrohre etc. sind hier nicht nötig.

Wie Fig. 1 zeigt, ist der Batch-Tank 6 in geschlossener Form ausgeführt. Daher ist die Zusammensetzung der Gasatmosphäre über dem Niveau 14 wählbar. Sie wird über eine Zuführung 16 für Frischgas zum Ersatz des beigemischten Gases bestimmt. Als weitere Vorrichtung zur Beimischung von Gas ist im Retentat im Batch-Tank 6 unterhalb des Oberflächenniveaus 14 ein poröser Ring 17 mit einer äusseren Gaszuführung angeordnet. Das Gas kann auch einfach in die Verbindungsleitung 18 zwischen Batch-Tank 6 und Förderpumpe 8 über eine Leitung 19 oder in die Rückführleitung 11 über eine Leitung 28 oder 29 beigemischt werden. Eine ähnliche Gaszuführung über eine Leitung 20 und ein von der Regelstufe 24 gesteuertes Ventil 21 ist zwischen dem Durchflussmesser 9 und dem statischen Mischer 10 vorgesehen.

Die einfachen Beimischungen des Gases über die Leitungen 19, 20, 28, 29 machen den Einsatz von Mischern 10 und 12 zur Homogenisierung des Retentates zweckmässig, um eine homogene verringerte Viskosität zu erreichen. Solche Mischer sind nicht notwendig, wenn man schon bei der Beimischung des Gases in den Retentatkreislauf für eine homogene Verteilung sorgt, z.B. durch Verwendung von gelochten Rohren, Sinterrohren, Membranen oder Venturidüsen in der Retentatleitung.

Fig. 3 zeigt als Beispiel die Beimischung von Luft 30 in die Leitung 11 gemäss Fig. 1 durch die Leitung 28, welche innerhalb der Leitung 11 als gelochtes Rohr 28' ausgebildet ist. Die Löcher 31 sind im Rohr 28' auf der dem Retentatstrom abgewendeten Seite angeordnet, wie die Pfeile 32 zeigen.

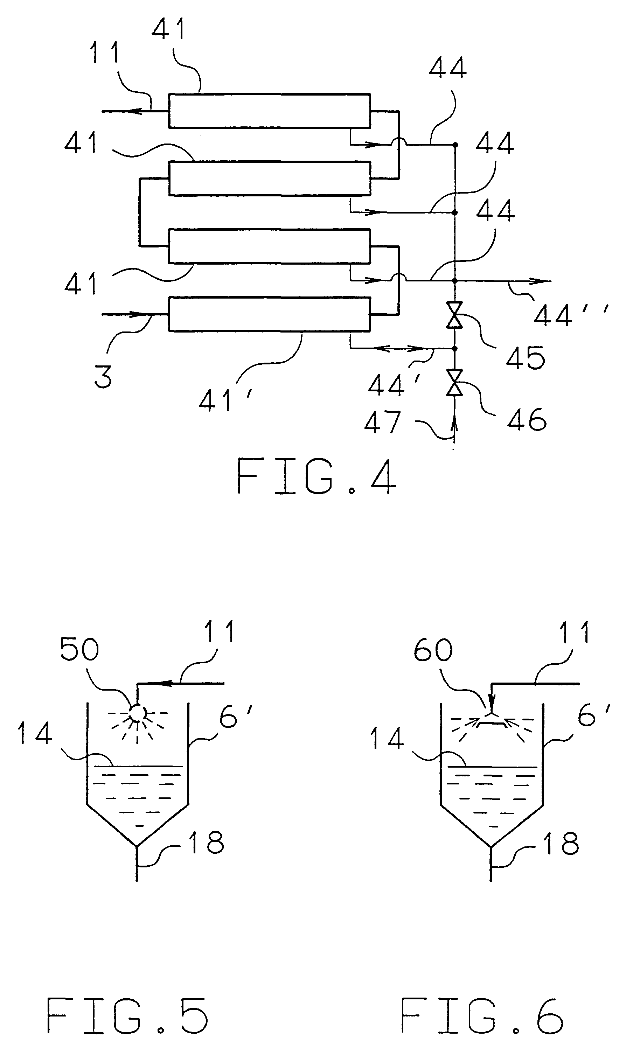

Wie schon erwähnt, umfassen industrielle Filtrationsanlagen mehrere Filtrationsmodule in Serie. Eine derartige Serie von nur vier Modulen 41, 41' zeigt beispielhaft Fig. 4. Die Serie 41, 41' ist anstelle des Moduls 1 in Fig. 1 zwischen die Zuführleitung 3 und die Abführleitung 11 für das Retentat eingesetzt. Jedes Modul 41, 41' besitzt seine Abführleitung 44, 44' für das Permeat, welche in eine Permeatsammelleitung 44'' zusammengeführt sind. Eines der Module, zweckmässig das erste 41' der Serie lässt sich mit Vorteil zur Beimischung von Gas verwenden, welches von der Permeatseite der Filtrationsmembran (2 in Fig. 1) her durch die Leitung 44' unter Druck eingeführt wird. In diesem Fall ist die Leitung 44' durch zwei Sperrventile 45, 46 von der Permeatsammelleitung 44'' getrennt und mit einer Gaszuführung 47 verbunden, wie Fig. 4 zeigt.

Durch Betätigung der Sperrventile 45, 46 lässt sich die Gaszuführung 47 abtrennen und Modul 41' in normaler Filterfunktion betreiben. Die Gasbeimischung zum Retentat durch die Filtrationsmembran eines Moduls 41' ergibt infolge der feinen und gleichmässig verteilten Membranöffnungen eine besonders homogene Gasverteilung im Retentat.

Die Fig. 5 bis 13 zeigen Varianten der Vorrichtungen zur Gasbeimischung im Batch-Tank 6 gemäss Fig. 1. Bei den Beispielen gemäss Fig. 5 bis 9 ist ein offener Batch-Tank 6' eingesetzt, sodass als Gas Luft aus der Umgebung eingemischt wird. Wie Fig. 5 zeigt, endet die Retentat-Rückführleitung 11 oberhalb des Retentatspiegels 14 im Tank 6' in einem Sprühkopf 50. Beim Austritt aus dem Sprühkopf 50 erhalten die Retentat-Teilströme die hohe Geschwindigkeit, um bei ihrem Aufprall auf dem Spiegel 14 eine gewünschte Menge Luft einzuziehen.

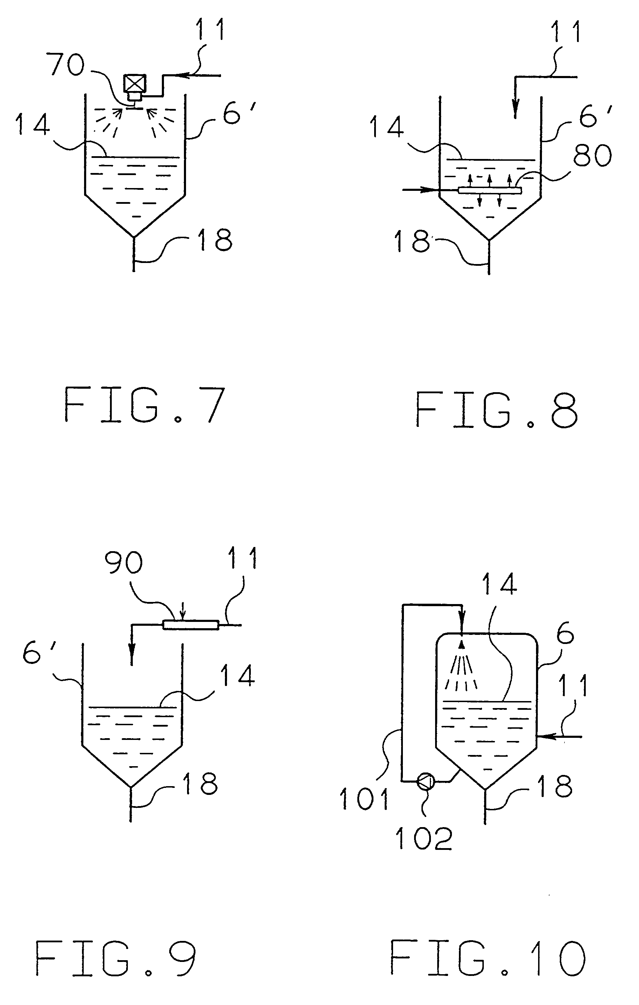

Gemäss der Variante von Fig. 6 ist der Sprühkopf durch eine Prallplatte 60 am Ausgang der Retentatleitung 11 ersetzt, gemäss Fig. 7 durch einen Verteiler 70 mit mechanisch bewegten Teilen. Bei diesen Beispielen erfolgt die Beimischung der Luft zum Retentat bereits oberhalb des Retentatspiegels 14, es wird hier keine hohe Aufprallgeschwindigkeit erzielt.

Fig. 8 zeigt einen Batch-Tank 6', in welchem, ähnlich wie der poröse Ring 17 in Fig. 1, eine Sinterplatte 80 als Membran zur Luftbeimischung unterhalb des Retentatspiegels 14 angeordnet ist. Bei der Anordnung gemäss Fig. 9 weist die Retentatleitung 11 vor ihrem Ende oberhalb des Retentatspiegels 14 im Tank 6' eine Membran 90 auf, durch die Luft unter Druck beigemischt wird. Die Membran 90 kann in einem Mikrofiltrations-Modul oder als Sinterrohr angeordnet sein.

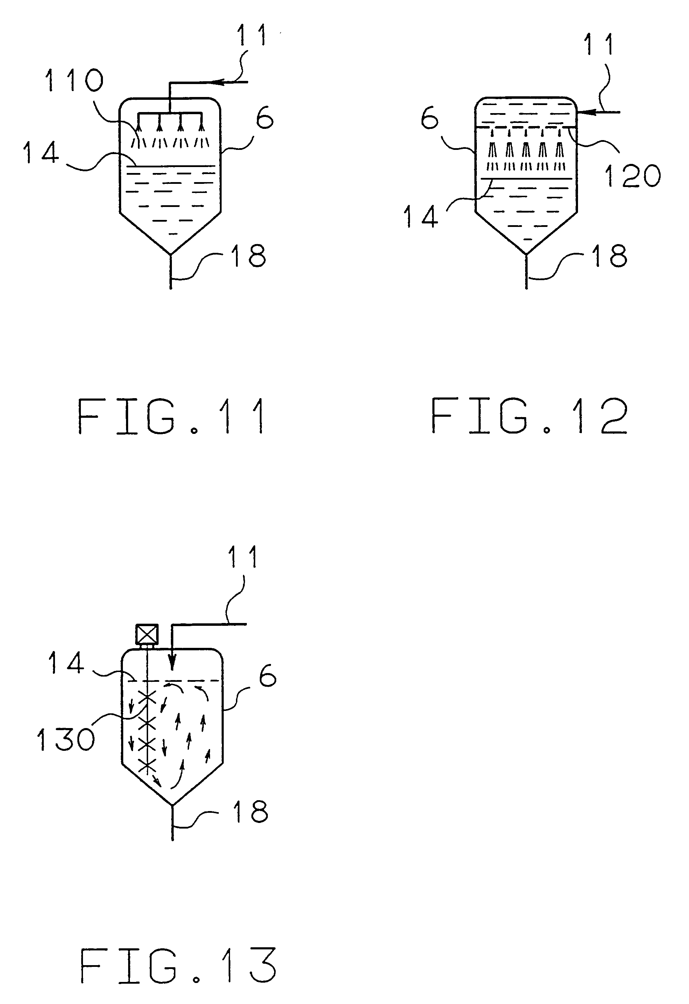

Fig. 10 zeigt einen geschlossenen Batch-Tank 6, welcher einen eigenen Retentatkreislauf 101 mit einer Umwälzpumpe 102 zum Einbringen von Gas oberhalb des Retentatspiegels 14 aufweist. Hierbei ist die Retentat-Rückführleitung 11 mit dem Retentat im Tank 6 unterhalb des Spiegels 14 verbunden. Fig. 11 zeigt, wie auch in einem geschlossenen Tank 6 das Retentat über die Rückführleitung 11 auf eine Reihe von freien Leitungsenden 110 verteilt wird. Das hier austretende Retentat nimmt das oberhalb des Niveaus 14 vorhandene Gas in den Retentatstrom auf. Fig. 12 zeigt eine Anordnung mit ähnlicher Wirkung, wie in Fig. 11, nur sammelt sich hier das Retentat aus der Leitung 11 im geschlossenen Batch-Tank 6 oberhalb einer Lochplatte 120, welche es in den darunter befindlichen Gasraum verteilt.

Fig. 13 zeigt wiederum den geschlossenen Batch-Tank 6 mit einem darin angeordneten Rührwerk 130 zum hochtourigen Betrieb. Die Rührorgane des Rührwerks 130 ziehen gleichzeitig Gas oberhalb des Retentatniveaus 14 nach unten in das Retentat ein und verteilen es dort gleichmässig zur Weiterleitung in den Kreislauf über die Leitung 18.

Neben der aufgabengemässen Senkung der Viskosität des Retentates hat die erfindungsgemässe Gasbeimischung zum Retentat noch weitere Vorteile. Es ist bekannt, in verflüssigten Fruchtmaischen oder in ausgepresstem Fruchtsaft zur Verbesserung der Saftstabilität gegen Nachtrübungen Phenole durch in den Tanks eingemischte Luft oder eingemischten Sauerstoff zu oxidieren. Bei einer Anwendung des erfindungsgemässen Verfahrens für diese Zwecke tritt diese Wirkung infolge der Beimischung und Verteilung geeigneter Gase in verstärkter Form auf.

Weiterhin wird die Filtrationsleistung in den Modulen 1 verbessert, weil die Verminderung der Viskosität die Scherkräfte der Permeatströmung an den Membranoberflächen günstig beeinflusst. Neben den höheren Eindickgraden des Retentates ergibt sich auch eine Energieeinsparung durch eine verminderte Umwälzarbeit am weniger viskosen Retentat, eine Reduktion des Membranverschleisses, und die Möglichkeit, wirtschaflichere Filtrationsanlagen einzusetzen, weil man mit niedriger viskosen Retentaten grössere Anzahlen Filtrationsmodule in Serien fahren kann.

Bekannte Pressverfahren bei Fruchtmaischen können entbehrlich werden, weil diese Maischen trotz aller darin enthaltener Feststoffanteile nun direkt im Querstromverfahren filtriert werden können. Ist die Luftbeimischung hinreichend fein verteilt, so nimmt das Retentat einen fast schaumartigen Zustand an. Eine Verbesserung wird aber bereits erreicht, wenn man auf die Verteilung verzichtet und das gasförmige Medium dem Retentatstrom nach der Umwälzpumpe einfach mit einer Folge von zeitlichen Unterbrechungen hinzufügt.

## Patentansprüche

1. Querstrom-Filtrationsverfahren zum Eindicken einer Fest-Flüssig-Mischung, bei dem die zu filtrierende Mischung als Retentat durch zumindest ein Membranmodul (1, 41) mit porösen Membranen (2) hindurchgeführt wird, um von der Mischung ein flüssiges Filtrat durch die Membranen (2) hindurch abzutrennen, **dadurch gekennzeichnet, dass** dem Retentat ein gasförmiges Medium beigemischt wird, wobei das gasförmige Medium dem Retentat zur Erleichterung des hindurchführens des Retentates durch das zumindest eine Membranmodul (1, 41) beigemischt wird.

2. Verfahren nach Anspruch 1, **dadurch gekennzeichnet, dass** dem Retentat als gasförmiges Medium Luft, Stickstoff oder Sauerstoff beigemischt wird.

3. Verfahren nach Anspruch 1, **dadurch gekennzeichnet, dass** es in einer Batch-Fahrweise ausgeführt wird, wobei das Retentat in einem Kreislauf in einen Batch-Tank (6) rückgeführt wird und das gasförmige Medium dem Retentat im Zuführstrom (3) zu den Membran-Modulen (1, 41) beigemischt wird.

4. Verfahren nach Anspruch 1, **dadurch gekennzeichnet, dass** die Menge des beigemischten gasförmigen Mediums in Abhängigkeit von der Dichte oder der Viskosität des Retentates oder von dessen Druckabfall an dem zumindest einen Membranmodul (1, 41) geregelt wird.

5. Verfahren nach Anspruch 1, **dadurch gekennzeichnet, dass** das Retentat den Membranmodulen (1, 41) mittels einer Pumpe (8) über eine Leitung (3) zugeführt wird und dass das gasförmige Medium dem Retentatstrom nach der Pumpe (8) derart beigemischt wird, dass Gasblasen einer Grösse bis zum Durchmesser der Zuführleitung (3) entstehen.

6. Verfahren nach Anspruch 1, **dadurch gekennzeichnet, dass** das Retentat den Membranmodulen (1, 41) mittels einer Pumpe (8) über eine Leitung (3) zugeführt wird und dass das gasförmige Medium dem Retentatstrom nach der Pumpe (8) mit einer Folge von zeitlichen Unterbrechungen beigemischt wird.

7. Verfahren nach Anspruch 3, **dadurch gekennzeichnet, dass** das gasförmige Medium dem Retentat im Batch-Tank (6) bei der Rückführung in den Batch-Tank (6) beigemischt wird, indem das Retentat mit möglichst grosser Geschwindigkeit auf die Oberfläche (14) des bereits im Tank (6) befindlichen Retentates auftrifft.

8. Verfahren nach Anspruch 7, **dadurch gekennzeichnet, dass** die Retentat-Füllhöhe im Batch-Tank (6) bis zur Oberfläche (14) kleiner als der Durchmesser des Batch-Tanks (6) gehalten wird.

9. Verfahren nach Anspruch 3, **dadurch gekennzeichnet, dass** die Strömungsgeschwindigkeit im Retentatkreislauf in Abhängigkeit von der mittleren, pro Zeiteinheit dem Retentat beigemischten Menge des gasförmigen Mediums verändert wird.

10. Verfahren nach Anspruch 9, **dadurch gekennzeichnet, dass** die Strömungsgeschwindigkeit durch die Fördermenge des Retentates derart verändert wird, dass das Druckgefälle im Retentatkreislauf über die Membranmodule (1, 41) oder der Eingangsdruck am ersten Modul konstant bleibt.

11. Verfahren nach Anspruch 1, **dadurch gekennzeichnet, dass** die zu filtrierende Fest-Flüssig-Mischung durch eine Serie hintereinander geschalteter Module (41, 41') mit porösen Membranen hindurchgeführt wird und dass in einem der ersten oder letzten Module (41') der Serie Gas von der Filtratseite her mit Überdruck durch die Membran hindurch dem Retentat beigemischt wird.

12. Anlage zum Eindicken einer Fest-Flüssig-Mischung auf einen hohen Feststoffanteil mit mindestens einem Filtrationsmodul (1, 41) mit porösen Membranen (2), welche mit einem Strom der zu filtrierenden Fest-Flüssig-Mischung als Retentat mittels einer Förderpumpe (8) und einer Zuführleitung (3) zu den Filtrationsmodulen (1, 41) tangential überströmbar sind, **gekennzeichnet durch** eine Vorrichtung (13, 17, 19, 20) zur Verminderung der Viskosität des Retentates zur Erleichterung des hindurchführens des Retentates **durch** das zumindest eine Filtrationsmodul (1, 41) **durch** Beimischung eines gasförmigen Mediums zu der zu filtrierenden Fest-Flüssig-Mischung, wobei die Vorrichtung zur Beimischung (20) eine Gaszuführleitung umfasst, in welcher ein Regelelement (21) für die Menge des zugeführten Gases angeordnet ist und wobei das Regelelement (21) für die Menge des zugeführten Gases wirkverbunden ist mit einer Einrichtung zur Messung der Viskosität (25), des Druckes (26, 27) oder des Durchflusses (9) des Retentates.

13. Anlage nach Anspruch 12, **dadurch gekennzeichnet, dass** auf die Vorrichtung zur Beimischung (20, 29) folgend in der Leitung (3, 11) für das Retentat ein Homogenisator oder ein statischer oder beweglicher Mischer (10, 12) angeordnet ist.

14. Anlage nach Anspruch 12, **gekennzeichnet durch** einen Batch-Tank (6, 6') für die einzudickende Fest-Flüssig-Mischung und **durch** offene Leitungen, Sinterplatten oder Membranen (80), welche unterhalb der Oberfläche (14) der einzudickenden Fest-Flüssig-Mischung im Batch-Tank (6, 6') zur Beimischung des gasförmigen Mediums angeordnet sind.

15. Anlage nach Anspruch 14, **gekennzeichnet durch** einen Batch-Tank (6, 6'), dessen Durchmesser wesentlich kleiner ist, als seine maximale Füllhöhe und welcher am unteren Ende eine Öffnung für den Retentat-Ausfluss aufweist, und **durch** am Ende offene Leitungen zur GasBeimischung, deren Öffnung unterhalb der Oberfläche (14) der einzudickenden Fest-Flüssig-Mischung im Batch-Tank (6, 6') in der unteren Tankzone im Bereich hoher Abwärtsströmung des Retentat-Ausflusses angeordnet ist.

16. Anlage nach Anspruch 12, **gekennzeichnet durch** einen Retentatkreislauf mit einem darin befindlichen Batch-Tank (6, 6') für die einzudickende Fest-Flüssig-Mischung, wobei der Retentatkreislauf eine Rückführleitung (11) für das Retentat in den Batch-Tank (6, 6') aufweist, deren Ende (13) im Batch-Tank (6, 6') oberhalb des Retentatspiegels (14) derart angeordnet ist, dass das Retentat aus der Rückführleitung (11) direkt auf den Retentatspiegel (14) auftrifft.

17. Anlage nach Anspruch 12, **gekennzeichnet durch** einen Retentatkreislauf mit einem darin befindlichen Batch-Tank (6, 6') für die einzudickende Fest-Flüssig-Mischung, wobei der Retentatkreislauf eine Rückführleitung (11) für das Retentat in den Batch-Tank (6, 6') aufweist, deren Ende (13) im Batch-Tank (6, 6') oberhalb des Retentatspiegels (14) angeordnet ist, sowie **durch** Düsen, Sprühköpfe (50), Prallplatten (60), mechanisch angetriebene Zerstäuber (70), mehrarmige Verteiler (110) oder in den Tank (6) eingezogene Lochböden (120), welche am Austritt der Retentatleitung (11) zur Beimischung des oberhalb des Retentatspiegels (14) befindlichen Gases zu der einzudickenden Fest-Flüssig-Mischung angeordnet sind.

## Claims

1. Cross-flow filtration process for concentrating a solid/liquid mixture, in which the mixture to be filtered in the form of retentate is passed through at least one membrane module (1, 41) with porous membranes (2) in order to separate a liquid filtrate from the mixture through the membranes (2), **characterised in that** a gaseous medium is added to the retentate, the gaseous medium being added to the retentate in order to facilitate the passage of the retentate through the at least one membrane module (1, 41).

2. Process according to claim 1, **characterised in that** air, nitrogen or oxygen is added to the retentate as the gaseous medium.

3. Process according to claim 1, **characterised in that** it is carried out in batch operation, the retentate being returned to a batch tank (6) in a loop and the gaseous medium being added to the retentate in the flow (3) supplied to the membrane modules (1, 41).

4. Process according to claim 1, **characterised in that** the quantity of gaseous medium added is controlled as a function of the density or the viscosity of the retentate or its drop in pressure at the at least one membrane module (1, 41).

5. Process according to claim 1, **characterised in that** the retentate is supplied to the membrane modules (1, 41) by means of a pump (8) via a line (3) and that the gaseous medium is added to the retentate flow downstream of the pump (8) in such a manner that gas bubbles having dimensions up to the diameter of the supply line (3) are produced.

6. Process according to claim 1, **characterised in that** the retentate is supplied to the membrane modules (1, 41) by means of a pump (8) via a line (3) and that the gaseous medium is added to the retentate flow downstream of the pump (8) in a series of interruptions over a period of time.

7. Process according to claim 3, **characterised in that** the gaseous medium is added to the retentate in the batch tank (6) as it is returned to the batch tank (6), the retentate striking the surface (14) of the retentate already situated in the tank (6) at the highest possible speed.

8. Process according to claim 7, **characterised in that** the retentate level in the batch tank (6) to the surface (14) is kept smaller than the diameter of the batch tank (6).

9. Process according to claim 3, **characterised in that** the flow rate in the retentate loop is varied as a function of the mean quantity of gaseous medium added to the retentate per unit of time.

10. Process according to claim 9, **characterised in that** the flow rate is varied by the quantity of retentate delivered, in such a manner that the drop in pressure in the retentate loop over the membrane modules (1, 41) or the inlet pressure at the first module remains constant.

11. Process according to claim 1, **characterised in that** the solid/liquid mixture to be filtered is passed through a series of modules (41, 41') with porous membranes arranged one behind the other and that gas is added to the retentate at excess' pressure through the membrane from the filtrate side in one of the first or last modules (41') in the series.

12. Plant for concentrating a solid/liquid mixture to a high solids content, comprising at least one filtration module (1, 41) with porous membranes (2) over which the solid/liquid mixture to be filtered in the form of retentate can flow tangentially to the filtration modules (1, 41) by means of a delivery pump (8) and a supply line (3), **characterised by** a device (13, 17, 19, 20) for reducing the viscosity of the retentate in order to facilitate the passage of the retentate through the at least one filtration module (1, 41) by adding a gaseous medium to the solid/liquid mixture to be filtered, the device (20) for adding a gaseous medium including a gas-supply line in which an element (21) for controlling the quantity of gas supplied is arranged and the element (21) for controlling the quantity of gas supplied being operatively connected to a device for measuring the viscosity (25), the pressure (26, 27) or the flow rate (9) of the retentate.

13. Plant according to claim 12, **characterised in that** a homogeniser or a static or movable mixer (10, 12) is arranged in the line (3, 11) for the retentate downstream of device (20, 29) for adding a gaseous medium.

14. Plant according to claim 12, **characterised by** a batch tank (6, 6') for the solid/liquid mixture to be concentrated and by open lines, sintered plates or membranes (80) arranged below the surface (14) of the solid/liquid mixture to be concentrated in the batch tank (6, 6') for adding the gaseous medium.

15. Plant according to claim 14, **characterised by** a batch tank (6, 6') the diameter of which is substantially smaller than its maximum level and which has an opening for the discharge of retentate at its lower end, and by lines for adding gas open at their ends, the openings being arranged below the surface (14) of the solid/liquid mixture to be concentrated in the batch tank (6, 6') in the lower tank zone in the region of high downward flow of the retentate discharge.

16. Plant according to claim 12, **characterised by** a retentate loop with a batch tank (6, 6') for the solid/liquid mixture to be concentrated situated therein, the retentate loop having a line (11) for returning the retentate to the batch tank (6, 6'), the end (13) of which is arranged in the batch tank (6, 6') above the retentate level (14) in such a manner that the retentate from the return line (11) strikes the retentate level (14) directly.

17. Plant according to claim 12, **characterised by** a retentate loop with a batch tank (6, 6') for the solid/liquid mixture to be concentrated situated therein, the retentate loop having a line (11) for returning the retentate to the batch tank (6, 6'), the end (13) of which is arranged in the batch tank (6, 6') above the retentate level (14), and by nozzles, spray heads (50), baffle plates (60), mechanically driven atomisers (70), multi-armed distributors (110) or perforated bases (120) inserted into the tank (6) arranged at the outlet of the retentate line (11) for adding the gas situated above the retentate level (14) to the solid/liquid mixture to be concentrated.

## Revendications

1. Procédé de filtration à courant transversal pour épaissir un mélange solide-liquide, dans lequel le mélange à filtrer est conduit sous forme d'un rétentat à travers au moins un module de membranes (1, 41) doté de membranes poreuses (2), afin de séparer du mélange un filtrat liquide à travers les membranes (2), **caractérisé en ce qu'**un milieu gazeux est ajouté au rétentat, le milieu gazeux étant ajouté au rétentat afin de faciliter le passage du rétentat à travers ledit au moins un module de membranes (1, 41).

2. Procédé selon la revendication 1, **caractérisé en ce que** l'on ajoute au rétentat de l'air, de l'azote ou de l'oxygène en tant que milieu gazeux.

3. Procédé selon la revendication 1, **caractérisé en ce qu'**il est mis en oeuvre suivant un mode de traitement groupé, le rétentat, dans un circuit, étant ramené dans un réservoir de traitement groupé (6) et le milieu gazeux étant ajouté au rétentat dans le courant d'amenée (3) aux modules de membranes (1, 41).

4. Procédé selon la revendication 1, **caractérisé en ce que** la quantité du milieu gazeux ajouté est ajustée en fonction de la consistance ou de la viscosité du rétentat, ou de sa chute de pression au niveau dudit au moins un module de membranes (1, 41).

5. Procédé selon la revendication 1, **caractérisé en ce que** le rétentat est amené aux modules de membranes (1, 41) au moyen d'une pompe (8) via une conduite (3), et **en ce que** le milieu gazeux est ajouté au courant de rétentat après la pompe (8), de telle sorte que des bulles de gaz sont générées, d'une taille allant jusqu'au diamètre de la conduite d'amenée (3).

6. Procédé selon la revendication 1, **caractérisé en ce que** le rétentat est amené aux modules de membranes (1, 41) au moyen d'une pompe (8) via une conduite (3) et **en ce que** le milieu gazeux est ajouté au courant de rétentat après la pompe (8) avec une succession de temps d'interruption.

7. Procédé selon la revendication 3, **caractérisé en ce que** le milieu gazeux est ajouté au rétentat dans le réservoir de traitement groupé (6) lors du retour au réservoir de traitement groupé (6), au moment où le rétentat atteint à une vitesse aussi élevée que possible la surface (14) du rétentat se trouvant déjà dans le réservoir (6).

8. Procédé selon la revendication 7, **caractérisé en ce que** la hauteur de remplissage du rétentat dans le réservoir de traitement groupé (6) est maintenue jusqu'à la surface (14) de façon à être inférieure au diamètre du réservoir de traitement groupé (6).

9. Procédé selon la revendication 3, **caractérisé en ce que** la vitesse d'écoulement dans le circuit du rétentat est modifiée en fonction de la quantité moyenne de milieu gazeux ajoutée au rétentat par unité de temps.

10. Procédé selon la revendication 9, **caractérisé en ce que** la vitesse d'écoulement est modifiée par la quantité de rétentat transporté de telle sorte que le gradient de pression dans le circuit du rétentat sur les modules de membranes (1, 41), ou la pression d'alimentation au niveau du premier module, demeure constante.

11. Procédé selon la revendication 1, **caractérisé en ce que** le mélange solide-liquide à filtrer est amené à traverser une série de modules dotés de membranes poreuses (41, 41') montés les uns à la suite des autres, et **en ce que** dans l'un des premiers ou des derniers modules (41') de la série, du gaz du côté filtrat est ajouté au rétentat avec une surpression à travers la membrane.

12. Installation pour épaissir un mélange solide-liquide jusqu'à une grande proportion de solides, avec au moins un module de filtration (1, 41) doté de membranes poreuses (2), lesquelles peuvent être traversées tangentiellement aux modules de filtration (1, 41) par un courant de mélange solide-liquide à filtrer sous forme d'un rétentat au moyen d'une pompe d'alimentation (8) et d'une conduite d'amenée (3), **caractérisée par** un dispositif (13, 17, 19, 20) de réduction de la viscosité du rétentat, afin de faciliter le mouvement traversant du rétentat à travers ledit au moins un module de filtration (1, 41), en mélangeant un milieu gazeux au mélange solide-liquide à filtrer, le dispositif de mélange (20) comprenant une conduite d'amenée de gaz, dans laquelle est disposé un élément de régulation (21) pour la quantité du gaz amené, l'élément de régulation (21) pour la quantité du gaz amené étant activement relié à un dispositif de mesure de la viscosité (25), de la pression (26, 27) ou du débit (9) du rétentat.

13. Installation selon la revendication 12, **caractérisée en ce qu'**un dispositif d'homogénéisation ou un mélangeur fixe ou mobile (10, 12) est disposé dans la conduite (3, 11) du rétentat à la suite du dispositif de mélange (20, 29).

14. Installation selon la revendication 12, **caractérisée par** un réservoir de traitement groupé (6, 6') pour le mélange solide-liquide à épaissir et par des conduites ouvertes, des plaques d'agglomération ou des membranes (80), qui sont disposées sous la surface (14) du mélange solide-liquide à épaissir dans le réservoir de traitement groupé (6, 6') pour l'ajout du milieu gazeux.

15. Installation selon la revendication 14, **caractérisée par** un réservoir de traitement groupé (6, 6'), dont le diamètre est sensiblement inférieur à sa hauteur de remplissage maximale, et qui, en une extrémité inférieure, comporte une ouverture pour la sortie du rétentat, et par des conduites ouvertes à l'extrémité pour le mélange du gaz, dont l'ouverture se situe en-dessous de la surface (14) du mélange solide-liquide à épaissir dans le réservoir de traitement groupé (6, 6'), dans la zone inférieure du réservoir dans une zone de fort écoulement descendant de la sortie du rétentat.

16. Installation selon la revendication 12, **caractérisée par** un circuit de rétentat avec un réservoir de traitement groupé (6, 6') qui se trouve à l'intérieur de celui-ci pour le mélange solide-liquide à épaissir, le circuit du rétentat comportant pour le rétentat une conduite de retour (11) dans le réservoir de traitement groupé (6, 6'), dont l'extrémité (13) dans le réservoir de traitement groupé (6, 6') est située au-dessus du niveau du rétentat (14) de telle sorte que le rétentat sortant de la conduite de retour (11) entre directement en contact avec le niveau du rétentat (14).

17. Installation selon la revendication 12, **caractérisée par** un circuit de rétentat avec un réservoir de traitement groupé (6, 6') qui se trouve à l'intérieur de celui-ci pour le mélange solide-liquide à épaissir, le circuit du rétentat comportant pour le rétentat une conduite de retour (11) dans le réservoir de traitement groupé (6, 6'), dont l'extrémité (13) dans le réservoir de traitement groupé (6, 6') est située au-dessus du niveau du rétentat (14), ainsi que par des buses, des têtes de pulvérisation (50), des plaques d'agglomération (60), des pulvérisateurs à commande mécanique (70), des distributeurs à bras multiples (110) ou des fonds à trous (120) remontant dans le réservoir (6), qui sont disposés en sortie de la conduite du rétentat (11) pour le mélange du gaz se trouvant au-dessus du niveau de rétentat (14) au mélange solide-liquide à épaissir.
